# EUROPÄISCHE PATENTSCHRIFT

(11) **EP 3 265 299 B1**
(45) Veröffentlichungstag und Bekanntmachung des Hinweises auf die Patenterteilung: **05.04.2023**
(21) Anmeldenummer: 16702418.1
(22) Anmeldetag: 01.02.2016
(51) Int. Cl.: B29C 70/78, B29C 70/08, B60N 2/68, B29C 43/18, B29L 9/00

(54) **BAUTEIL UND VERFAHREN ZU DESSEN HERSTELLUNG**
COMPONENT AND METHOD FOR THE PRODUCTION THEREOF
ÉLÉMENT ET SON PROCÉDÉ DE FABRICATION

(30) Priorität: 05.03.2015 DE 102015204017
(43) Veröffentlichungstag der Anmeldung: 10.01.2018
(73) Patentinhaber: Adient Luxembourg Holding S.à r.l., 1855 Luxembourg (LU)
(72) Erfinder: JANZ, Michael, 32609 Hüllhorst (DE); PROGSCHA, Rainer, 32369 Rahden (DE)
(74) Vertreter: Finger, Catrin
(86) Internationale Anmeldenummer: PCT/EP2016/052065
(87) Internationale Veröffentlichungsnummer: WO 2016/139021

(56) Entgegenhaltungen:
- DE-A1-102010 005 994
- US-A1- 2009 202 789

## Beschreibung

Die Erfindung betrifft ein Verfahren zur Herstellung eines Bauteils nach den Merkmalen des Oberbegriffs des Anspruchs 1. Des Weiteren betrifft die Erfindung ein mittels des Verfahrens hergestelltes Bauteil.

Aus dem Stand der Technik gemäß der EP 2 933 136 A1 der Anmelderin, deren vollständiger Inhalt hiermit durch Referenz aufgenommen wird, sind ein Polsterelement und ein Verfahren zur Herstellung eines Polsterelementes bekannt. Das Polsterelement ist aus einem Faserverbundwerkstoff mit einem dreidimensional stochastisch orientierten Fasermaterial gebildet. Der Faserverbundwerkstoff umfasst zumindest einen schweißbaren Thermoplast.

Aus der DE10 2010 005 994 A1 ist ebenfalls ein herkömmliches Polsterelement bekannt. Aus der US 2009/0202789 A1 ist ein alternatives Laminierverfahren zur Herstellung eines Schichtverbundprodukts bekannt.

Aufgabe der vorliegenden Erfindung ist es, ein gegenüber dem Stand der Technik verbessertes Verfahren zur Herstellung eines Bauteils, welches eine bessere Verteilung von zur Trocknung verwendeter Luft im Bauteil ermöglicht, und ein mittels des Verfahrens hergestelltes verbessertes Bauteil anzugeben.

Die Aufgabe wird erfindungsgemäß gelöst durch ein Verfahren zur Herstellung eines Bauteils mit den Merkmalen des Anspruchs 1 und durch ein Bauteil mit den Merkmalen des Anspruchs 7.

Vorteilhafte Ausgestaltungen der Erfindung sind Gegenstand der Unteransprüche.

In einem Verfahren zur Herstellung eines Bauteils wird erfindungsgemäß ein Vorformvlies, welches ein Kunststoffmaterial umfasst, insbesondere ein so genanntes Thermovorformvlies, zu einem steifen Halbzeug vorgeformt, zweckmäßigerweise durch Heißprägen, wobei auf eine Flächenseite des Halbzeugs ein Fasermaterial aufgebracht wird und in einem Formwerkzeug das Bauteil ausgeformt wird. Das Vorformen des Vorformvlieses zum Halbzeug erfolgt durch Erwärmen des Vorformvlieses, so dass es erweicht und zum Halbzeug vorformbar ist. Zweckmäßigerweise kühlt das Halbzeug danach derart ab, dass es wieder versteift und somit seine vorgeformte Form zumindest bis zum Ausformen des Bauteils im Formwerkzeug beibehält. Dadurch wird das Aufbringen des Fasermaterials erleichtert, insbesondere ist weniger Fasermaterial zum Ausbilden des Bauteils erforderlich. Zudem wird durch das steife Halbzeug, wenn erforderlich, ein Transport des Halbzeugs in eine andere Arbeitsstation, beispielsweise in eine Streustation zum Aufbringen des Fasermaterials, und insbesondere, wenn erforderlich, ein Transport des mit dem Fasermaterial bestreuten Halbzeugs in eine andere Arbeitsstation, beispielweise in das Formwerkzeug, ermöglicht. Als Bauteil wird mittels des Verfahrens insbesondere ein Bauteil für ein Fahrzeug hergestellt, zweckmäßigerweise ein Fahrzeuginnenraumbauteil, insbesondere ein Bauteil für einen Fahrzeugsitz, beispielsweise ein Lehnenträger oder ein Sitzkissenträger für einen Fahrzeugsitz.

Ein mittels des Verfahrens hergestelltes erfindungsgemäßes Bauteil umfasst somit eine aus dem vorgeformten Vorformvlies gebildete Schicht und eine Schicht, welche aus dem auf das vorgeformte Vorformvlies aufgebrachten Fasermaterial gebildet ist.

Dabei ist vorteilhafterweise die aus dem vorgeformten Vorformvlies gebildete Schicht einer Vorderseite des Fahrzeugsitzes zugewandt, d. h. sie bildet eine so genannte A-Seite des Bauteils, beispielsweise des Lehnenträgers oder Sitzkissenträgers, d h. eine Sitzflächenseite. Auf dieser Seite des Bauteils kann dann zur Ausbildung des Fahrzeugsitzes noch die Sitzfläche des Sitzkissens bzw. der Lehne ausgebildet werden, indem beispielsweise noch ein Polstermaterial und ein Sitzbezug angeordnet werden oder nur ein Sitzbezug angeordnet wird. Die Schicht, welche aus dem auf das vorgeformte Vorformvlies aufgebrachten Fasermaterial gebildet ist, ist einer Rückseite des Fahrzeugsitzes zugewandt, d. h. sie bildet eine so genannte B-Seite des Bauteils, beispielsweise des Lehnenträgers oder Sitzkissenträgers, welche dann eine Rückseite bzw. Unterseite des Fahrzeugsitzes bildet, die, wenn erforderlich, noch weiter verkleidet werden kann.

Das Vorformvlies weist vorteilhafterweise ein konstantes Flächengewicht auf, so dass auch die hergestellten Bauteile mit einem im Wesentlichen konstanten Flächengewicht ausgebildet werden können. Durch die Verwendung des Vorformvlieses und dessen Vorformung zum Halbzeug wird eine nach der Ausformung des Bauteils erforderliche Trockenzeit erheblich reduziert. Durch die verringerte Trocknungszeit kann eine Zykluszeit der Bauteilherstellung deutlich reduziert, vorteilhafterweise mehr als halbiert, werden. Dies resultiert insbesondere aus einem im Vergleich zum Stand der Technik geringeren Wasseranteil der Ausgangsmaterialien. Des Weiteren wird eine bessere Verteilung der zur Trocknung verwendeten Luft im gesamten Bauteil erreicht. Die Luft wird über das vorgeformte Vorformvlies, d. h. über das Halbzeug, und durch das Halbzeug hindurch, insbesondere auch in Längsrichtung des Halbzeugs, auch in trocknungskritische Bereiche des Bauteils geleitet. Zudem können Beschnittbereiche des Bauteils thermisch verformt und dadurch Stanzprozesse zur Abtrennung von überschüssigem Material optimiert werden.

In einer möglichen Ausführungsform wird das Vorformvlies mittels zumindest eines Formwerkzeugteils des Formwerkzeugs, zweckmäßigerweise mittels des Formwerkzeugunterteils, zum steifen Halbzeug vorgeformt. Hierzu ist lediglich eine erwärmte Platte erforderlich, auf welche das Vorformvlies aufgelegt wird, um es zu erwärmen und danach in das Formwerkzeugteil einzulegen. Alternativ oder zusätzlich zur erwärmten Platte sind auch andere Erwärmungseinrichtungen zur Erwärmung des Vorformvlieses möglich, beispielsweise eine Erwärmung mittels Infrarotbestrahlung durch einen oder mehrere Infrarotstrahler. D. h. es ist eine Erwärmung des Vorformvlieses mittels zumindest einer Erwärmungseinrichtung erforderlich, um es im erwärmten Zustand zum Halbzeug vorformen zu können. Für das Formwerkzeugteil ist zudem ein Deckel zum Ausformen des Vorformvlieses erforderlich, denn das andere Formwerkzeugteil kann zum Ausformen allein des Vorformvlieses nicht verwendet werden, da das Formwerkzeug zum Ausformen des Bauteils ausgebildet ist und daher eine größere Kavität aufweist, um auch das Fasermaterial aufzunehmen. Zum Ausformen des Halbzeugs ist daher eine andere Form mit einer geringeren Kavität erforderlich, welche durch den Deckel erreicht wird, der auf das Formwerkzeugteil aufgesetzt wird.

Zweckmäßigerweise wird das Fasermaterial danach auf das im Formwerkzeug angeordnete Halbzeug aufgebracht und das Bauteil wird mittels des Formwerkzeugs ausgeformt. Dadurch ist nur eine einzige Herstellungsstation erforderlich, in welcher das gesamte Verfahren durchgeführt wird.

Alternativ kann das Halbzeug aus dem Formwerkzeugteil entnommen werden und das Fasermaterial in einer anderen Station auf das Halbzeug aufgebracht werden. Anschließend kann das Halbzeug dann zusammen mit dem aufgebrachten Fasermaterial wieder in das Formwerkzeug eingelegt werden, um das Bauteil auszuformen. Dies könnte beispielsweise sinnvoll sein, wenn eine separate Streustation zum Aufbringen des Fasermaterials vorgesehen ist. Dadurch wird eine Entkopplung der Streustation und der Formgebung zum Halbzeug bzw. zum Bauteil erreicht. In diesem Fall kann, während das Fasermaterial in der Streustation auf das Halbzeug aufgebracht wird, bereits das nächste Halbzeug ausgebildet werden. Dadurch wird eine schnellere Herstellung mehrerer Bauteile erreicht.

In einer weiteren möglichen Ausführungsform wird das Vorformvlies mittels eines separaten Vorformwerkzeugs zum steifen Halbzeug vorgeformt. Bei dieser Ausführungsform kann das Halbzeug dann in das Formwerkzeug eingebracht werden, das Fasermaterial auf das im Formwerkzeug angeordnete Halbzeug aufgebracht werden und das Bauteil ausgeformt werden, oder in besonders vorteilhafterweise wird das Fasermaterial auf das Halbzeug aufgebracht, beispielsweise in einer separaten Streustation, und erst danach wird das Halbzeug mit dem Fasermaterial in das Formwerkzeug eingelegt, um das Bauteil auszuformen. Auf diese Weise werden das Aufbringen des Fasermaterials auf das Halbzeug und das Ausformen des Bauteils im Formwerkzeug voneinander entkoppelt, so dass diese beiden Arbeitsschritte unabhängig voneinander durchgeführt werden können. Dadurch wirken sich längere Fertigungszeiten in einem der beiden Arbeitsschritte nicht auf den jeweils anderen Arbeitsschritt aus. Insbesondere kann auf diese Weise, während ein Bauteil im Formwerkzeug ausgeformt wird, bereits Fasermaterial auf das nächste Halbzeug aufgebracht werden, so dass eine Herstellungszeit mehrerer Bauteile erheblich reduziert wird.

Durch das oben beschriebene Vorformen des Vorformvlieses mittels eines separaten Vorformwerkzeugs wird das Formwerkzeug zur Ausformung des Bauteils nicht durch das Vorformen des Vorformvlieses blockiert, d. h. es können zeitgleich Vorformvliese im Vorformwerkzeug vorgeformt und Bauteile im Formwerkzeug ausgeformt werden, so dass die Herstellungszeit zur Herstellung mehrerer Bauteile reduziert ist.

Durch das beschriebene Verfahren wird insbesondere eine Anzahl von Verfahrensschritten und/oder Verfahrenswerkzeugen reduziert. Beispielsweise werden alle Verfahrensschritte in derselben Arbeitsstation durchgeführt oder es werden mehrere Arbeitsstationen verwendet, wobei diese Arbeitsstationen zeitgleich betrieben werden können, so dass bei der Herstellung mehrerer Bauteile ein Verfahrensschritt zur Herstellung eines Bauteils und zeitgleich ein anderer Verfahrensschritt zur Herstellung eines weiteren Bauteils durchgeführt werden kann. Zudem kann dadurch eine Umsetzung einer Modulbauweise verbessert werden.

Durch Entfallen einzelner Verfahrensschritte und/oder Verfahrenswerkzeuge können Zeit- und Kostenaufwand reduziert werden.

Das Vorformvlies ersetzt insbesondere eine im Stand der Technik verwendete herkömmliche Wollwatte, welche die geschilderten Vorteile des Vorformvlieses, insbesondere die Steifigkeit, nicht aufweist. Daher wäre beispielsweise ein Aufbringen des Fasermaterials auf die Wollwatte außerhalb des Formwerkzeugs und ein anschließender Transport zum Formwerkzeug nicht oder nur mit einem erheblichen zusätzlichen Aufwand möglich. Das Vorformvlies, welches diese Vorteile ermöglicht, ist beispielsweise aus Polyesterfasern und/oder anderen Kunststofffasern, insbesondere Schmelzfasern, ausgebildet. Auch eine Ausbildung aus mit derartigen Kunststofffasern, insbesondere Schmelzfasern, vermischter Wollwatte/Reißwollwatte ist möglich. D. h. das Vorformvlies ist derart ausgebildet, dass es im auf eine vorgegebene Erweichungstemperatur erwärmten Zustand umformbar ist und durch anschließendes Abkühlen wieder versteift. Bei Verwendung von Wollwatte, beispielsweise Reißwollwatte, wird dies durch den Zusatz eines vorgegebenen Anteils der oben genannten Kunststofffasern zu dieser Wollwatte erreicht. Durch die Verwendung des Vorformvlieses wird eine Entnahme-, Reinigungs- und Einlegezeit reduziert.

Die Verwendung des vorgeformten Vorformvlieses, d. h. des durch Vorformen des Vorformvlieses ausgebildeten Halbzeugs, ermöglicht eine hohe Steifigkeit und gleichzeitig eine verbesserte Konturenbildung. Durch Verwendung von vorgeformten Vorformvliesen werden während des Aufbringens des Fasermaterials, beispielsweise im Formwerkzeug oder auch außerhalb des Formwerkzeugs, vorteilhafterweise keine Vorformbacken mehr benötigt oder es werden zumindest einfacher ausgeformte Vorformbacken und/oder eine geringere Anzahl an Vorformbacken benötigt. Diese Vorformbacken dienen der Verdichtung und somit der Vorformung des aufgebrachten Fasermaterials an vorgegebenen Stellen, an welchen beispielsweise eine größere Materialstärke des Bauteils benötigt wird, zum Beispiel in einem Kopfstützenbereich und/oder in einem Bereich von Seitenwangen. Durch die ausgebildete Form des Halbzeugs, welches bereits die Form des Bauteils auf einer Seite des Bauteils aufweist, da es am fertigen Bauteil eine Seite, insbesondere die oben bereits beschriebene A-Seite des Bauteils bildet, und durch die relativ hohe Steifigkeit des Halbzeugs wird das Aufbringen des Fasermaterials ohne das Verdichten mittels der Vorform backen ermöglicht. Insbesondere wird weniger Fasermaterial benötigt, um eine erforderliche Steifigkeit des Bauteils zu erreichen. Im Stand der Technik wird diese Steifigkeit alleine durch eine entsprechend große Menge an Fasermaterial erreicht, welche in das Formwerkzeug eingefüllt wird und durch Ausformen im Formwerkzeug das Bauteil bildet. Bei der erfindungsgemäßen Lösung wird das Bauteil im Gegensatz dazu aus dem vorgeformten relativ steifen Vorformvlies, welches einen erheblichen Beitrag zur Festigkeit, Steifigkeit und Widerstandsfähigkeit des Bauteils leistet, und dem aufgebrachten Fasermaterial gebildet. Die Ausgestaltung des Formwerkzeuges und des Streuwerkzeuges für das Verfahren kann somit vereinfacht und kostengünstig gestaltet werden. Ebenfalls werden Ausfall-, Reinigungs-, und Streuzeiten reduziert. Handelt es sich bei dem auf diese Weise ausgeformten Bauteil um einen Lehnenträger oder einen Sitzkissenträger, so wird auf der A-Seite des Bauteils zur Ausbildung einer Lehne bzw. eines Sitzkissens beispielsweise des Fahrzeugsitzes zweckmäßigerweise ein polsternder Komforteinleger und/oder ein entsprechend gepolsterter Bezug angeordnet, um eine ausreichende Polsterung der Lehne bzw. des Sitzkissens zu erreichen.

Das auf das Halbzeug, d. h. auf das vorgeformte Vorformvlies, aufgebrachte Fasermaterial, umfasst zweckmäßigerweise Kunststofffasern und/oder Naturfasern. Es handelt sich hierbei vorteilhafterweise um ein dreidimensionales stochastisch orientiertes Fasermaterial. Kunststofffasern sind beispielsweise aus einem Thermoplast ausgebildet, insbesondere aus einem modifizierten und schweißbaren Thermoplast. Beispielsweise sind die Kunststofffasern aus Polyethylenterephthalat (PET), aus Polyester, aus einem Polysulfon, insbesondere Polyethersulfon (PES oder PESU) oder aus einem synthetischen Polymer, insbesondere aus Polylactid (PLA) ausgebildet. Auch eine Mischung von Fasern aus verschiedenen Kunststoffen ist möglich. Zur Bindung des Fasermaterials ist ein Bindemittel, insbesondere ein duroplastisches Bindemittel, vorgesehen. Das Bindemittel ist zum Beispiel ein duroplastischer Kleber, insbesondere ein Halogenkohlenwasserstoff, beispielsweise Chloropren-Kautschuk und/oder ein Polyurethane-basiertes duroplastisches Bindemittel, beispielsweise ein PU oder PUR-Kleber.

Die Fasern werden zweckmäßigerweise im Streuwerkzeug mit dem Bindemittel vermischt und mittels des Streuwerkzeugs auf das Halbzeug, d. h. auf das vorgeformte Vorformvlies, aufgebracht. Das Bindemittel dient insbesondere der stoffschlüssigen Verbindung der Fasern des Fasermaterials miteinander und mit dem Vorformvlies 1 während der Ausformung des Bauteils im Formwerkzeug.

Die Verwendung eines solchen mit einem Bindemittel vermischten Fasermaterials zur Ausbildung von Bauteilen ist bereits in der EP 2 933 136 A1 der Anmelderin beschrieben, deren vollständiger Inhalt, insbesondere deren Inhalt hinsichtlich des Fasermaterials, des Bindemittels und der Verarbeitung zum Bauteil, hiermit durch Referenz aufgenommen wird. Der Hauptunterschied und die wesentliche Vorteile erzielende Verbesserung des erfindungsgemäßen Verfahrens besteht in der Verwendung eines Vorformvlieses, in der Vorformung dieses Vorformvlieses zum Halbzeug und im Aufbringen des Fasermaterials auf dieses Halbzeug. Das Bauteil wird dann aus dem Halbzeug und dem aufgebrachten Fasermaterial ausgebildet. Dadurch ergeben sich die oben geschilderten Vorteile. Am fertigen Bauteil bildet das Vorformvlies die A-Seite des Bauteils.

Das verwendete Vorformvlies umfasst beispielsweise ein Polyestermaterial und/oder andere Schmelzfasern, d. h. es umfasst zweckmäßigerweise Fasern aus Kunststoff, insbesondere aus Thermoplast. Des Weiteren kann es beispielsweise auch Naturfasern oder andere Fasern umfassen. Geeignet zum Ausbilden des Vorformvlieses sind beispielsweise die oben bereits genannten Fasermaterialien, welche zum Aufbringen auf das vorgeformte Vorformvlies, d. h. auf das Halbzeug, geeignet sind. Das Vorformen dieses Vorformvlieses erfolgt durch Erwärmen und anschließendes Formen. Nach dem Abkühlen behält das dadurch ausgebildete Halbzeug dann diese Vorform.

Das Ausformen des Bauteils im Formwerkzeug erfolgt durch ein stoffschlüssiges Verbinden der Fasern des Fasermaterials miteinander und mit dem Vorformvlies durch Verpressen mittels des Formwerkzeugs. Das stoffschlüssige Verbinden erfolgt mittels des Bindemittels und/oder mittels Erwärmen des Fasermaterials und/oder des Vorformvlieses im Formwerkzeug und/oder vor dem Einlegen in das Formwerkzeug.

In einer möglichen Ausführungsform kann zusätzlich vorgesehen sein, ein oder mehrere Einlegeteile aus Kunststoff, beispielsweise aus Polyethylenterephthalat (PET), in das Bauteil einzubringen. Derartige Einlegeteile, beispielsweise um eine Sitzbelüftung zu ermöglichen, werden zweckmäßigerweise auf das Halbzeug aufgebracht und mit einem so genannten Klebeweb und/oder durch Heißnieten mittels einer so genannten Heißnieteinheit und/oder durch Kaltstempelpressen mit dem Halbzeug verbunden. Dann wird das Fasermaterial auf das Halbzeug aufgebracht und das Bauteil im Formwerkzeug ausgeformt, so dass das Einlegeteil oder die Einlegeteile im Bauteil integriert sind.

Aufgrund einer dadurch partiell anderen Dicke des aufgebrachten und zu verpressenden Fasermaterials im Bereich des Einlegeteils oder der Einlegeteile im Vergleich zu einer Ausbildung eines Bauteils ohne Einlegeteile wird als Formwerkzeug zweckmäßigerweise ein so genanntes Kassettenwerkzeug verwendet, wobei mittels einer oder mehrerer Kassetten die Form des Formwerkzeuges verändert werden kann. Es sind somit keine mehreren Formwerkzeuge erforderlich, sondern das Formwerkzeug kann an verschiedene Formen angepasst werden. Auch diese Ausführungsform des Bauteils weist gegenüber dem Stand der Technik ein geringeres Gewicht auf, lässt sich nach dem Ausbilden im Kassettenwerkzeug gut trocknen und weist eine höhere Sortenreinheit auf, da beispielsweise die Einlegeteile, das Fasermaterial und das Vorformvlies den gleichen Kunststoff aufweisen, zum Beispiel Polyethylenterephthalat (PET), während im Stand der Technik ein Wollvlies verwendet wird, d. h. ein weiteres Material, welches die Sortenreinheit reduziert.

In einer möglichen Ausführungsform kann auf einer Vorderseite des Halbzeugs, welche die A-Seite des Bauteils bildet, und/oder auf einer Rückseite des Halbzeugs, auf welche das Fasermaterial aufgebracht wird, zumindest bereichsweise oder im Wesentlichen vollflächig ein Vlies oder ein Schaumeinleger aufgebracht werden. Auf der Vorderseite erfolgt dies beispielsweise durch Einlegen in das Formwerkzeug, bevor das Halbzeug eingelegt wird. Auf der Rückseite erfolgt dies zweckmäßigerweise durch Aufbringen auf das Halbzeug, bevor das Fasermaterial aufgebracht wird.

Ausführungsbeispiele der Erfindung werden anhand von Zeichnungen näher erläutert. Dabei zeigen:
- Figur 1: schematisch eine Draufsicht eines vorgeformten Vorformvlieses für einen Lehnenträger,
- Figur 2: schematisch eine perspektivische Ansicht des vorgeformten Vorformvlieses für den Lehnenträger,
- Figur 3: schematisch eine perspektivische Ansicht eines Lehnenträgers,
- Figur 4: schematisch eine perspektivische Ansicht eines vergrößerten Ausschnittes des Lehnenträgers, und
- Figur 5: schematisch einen Verfahrensablauf eines Verfahrens zur Herstellung eines Bauteils.

Einander entsprechende Teile sind in allen Figuren mit den gleichen Bezugszeichen versehen.

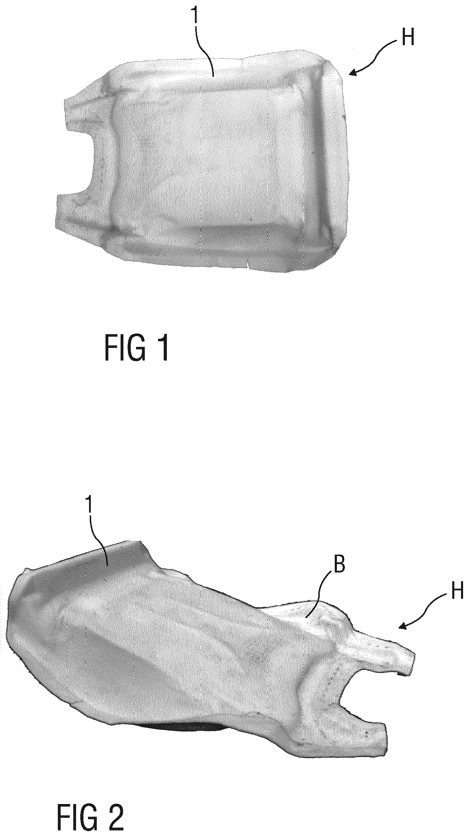

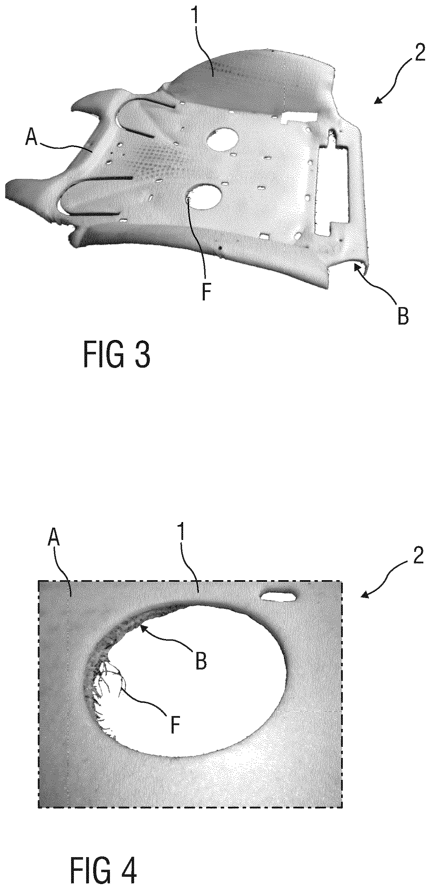

Die Figuren 1 und 2 zeigen jeweils eine Draufsicht und eine perspektivische Ansicht eines vorgeformten Vorformvlieses 1 für ein Bauteil 2. Das Bauteil 2, welches in Figur 3 und im Detail in Figur 4 gezeigt ist, ist im dargestellten Beispiel ein Lehnenträger eines nicht näher dargestellten Fahrzeugsitzes und wird im Folgenden als Lehnenträger 2 bezeichnet. Durch das Vorformen des Vorformvlieses 1 wird ein Halbzeug H ausgebildet, welches eine schalenförmige Form aufweist, die einer groben Form des herzustellenden Bauteils 2, im dargestellten Beispiel des herzustellenden Lehnenträgers 2, entspricht. Das Vorformvlies 1 ist sehr steif und in Form einer Schale vorgeformt und vorbeschnitten.

Zur Herstellung des Lehnenträgers 2 aus dem vorgeformten Vorformvlies 1, insbesondere eines steifen und/oder heißgeprägten Thermovorformvlieses, wird zusätzlich ein Fasermaterial F, vorteilhafterweise in Form eines Faserverbundwerkstoffs, verwendet, welches vorzugsweise ein hohes Rückstellverhalten aufweist und/oder aus einem modifizierten und somit schweißbaren Thermoplast gebildet ist.

Dabei kann das Vorformvlies 1 selbst ebenfalls aus einem solchen Faserverbundwerkstoff hergestellt sein.

Insbesondere ist der Faserverbundwerkstoff aus einem dreidimensionalen stochastisch orientierten, Fasermaterial F aus Polyethylenterephthalat (PET) oder Polyester oder einem Polysulfon, insbesondere Polyethersulfon (kurz PES oder PESU genannt) oder aus einem synthetischen Polymer, insbesondere aus Polylactid (kurz PLA genannt), gebildet, das mittels eines Halogenkohlenwasserstoffs, insbesondere Chloropren-Kautschuk, und/oder mittels Polyurethane-basierten duroplastischen Bindemitteln gebunden ist.

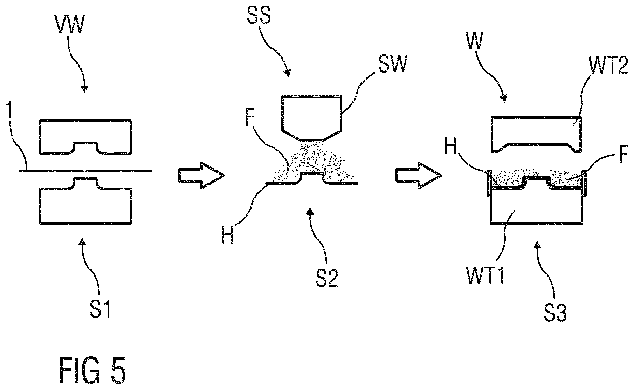

Ein Verfahrensablauf zur Herstellung ist, schematisch stark vereinfacht, in Figur 5 gezeigt. In einem ersten Verfahrensschritt S1 wird zur Herstellung des Bauteils 2, hier des Lehnenträgers 2, das Vorformvlies 1 für eine Vorderseite A (A-Seite) des Lehnenträgers 2 umgeformt, d. h. vorgeformt, so dass das Halbzeug H ausgebildet wird.

In einem zweiten Verfahrensschritt S2 wird auf das vorgeformte Vorformvlies 1, d. h. auf das Halbzeug H, das Fasermaterial F aufgebracht. Hierzu wird es beispielsweise in ein Formwerkzeug W gelegt und mit dem Fasermaterial F bestreut oder in einer Streustation SS bestreut und erst danach in das Formwerkzeug W eingelegt.

Anschließend wird das Formwerkzeug W geschlossen und das Bauteil 2 wird ausgeformt. Dies, d. h. das Ausformen des Bauteils 2 mittels des Formwerkzeugs W, bildet einen dritten Verfahrensschritt S3 des Verfahrens.

Das in das Formwerkzeug W eingebrachte Fasermaterial F, insbesondere der Faserverbundwerkstoff, füllt aufgrund seines hohen Rückstellverhaltens einen verbleibenden Freiraum zwischen dem vorgeformten Vorformvlies 1, d. h. zwischen dem Halbzeug H, und einer der Form der Rückseite B (auch B-Kontur genannt) entsprechenden Formenhälfte des Formwerkzeugs W ohne weiteres Einwirken aus. Dies wird durch das oben beschriebene dreidimensionale stochastisch orientierte Fasermaterial erreicht, welches gekräuselte Fasern aufweist, die ein großes Volumen des Formwerkzeugs ausfüllen, sich gut verpressen und miteinander verbinden lassen und dann eine gute Steifigkeit, Festigkeit und Widerstandsfähigkeit und vorzugsweise dennoch eine Weichheit aufweisen. Das beschriebene Verfahren, insbesondere die Verwendung eines vorgeformten Vorformvlieses 1, auf welches das Fasermaterial aufgestreut wird, ermöglicht einen Entfall von Vorformbacken an einem Streuwerkzeug SW oder zumindest eine Reduzierung einer Anzahl der Vorformbacken und/oder eine einfachere Ausbildung der Vorformbacken und stellt somit eine einfachere Fertigung dar und reduziert somit Ausfall-, Reinigungs- und Streuzeiten. Im Stand der Technik dienen die Vorformbacken einer Vorverdichtung von eingestreutem Fasermaterial in Bereichen, in welchen mehr Fasermaterial beispielsweise aufgrund einer erforderlichen höheren Festigkeit und Steifigkeit des Bauteils 2 benötigt wird, beispielsweise in einem Kopfstützenbereich und/oder in einem Bereich von Seitenwangen. Durch die Verwendung des relativ steifen vorgeformten Vorformvlieses 1 wird jedoch eine erheblich bessere Festigkeit und Steifigkeit mit geringerem Materialeinsatz an Fasermaterial F erreicht. Insbesondere entfällt durch das Verfahren eine Einlegehilfe, welche im Stand der Technik zum Einlegen von Wollwatte in das Formwerkzeug und zu deren Ausrichten und Recken im Formwerkzeug verwendet wird. Dies ist im Stand der Technik aufgrund der nicht vorhandenen Steifigkeit der Wollwatte erforderlich. Im Gegensatz dazu weist das aus dem Vorformvlies 1 vorgeformte Halbzeug H eine ausreichende Steifigkeit auf, so dass eine derartige Einlegehilfe nicht erforderlich ist.

Der in den Figuren 3 und 4 dargestellte Lehnenträger 2, wobei Figur 3 eine perspektivische Ansicht des Lehnenträgers 2 und Figur 4 einen vergrößerten Ausschnitt des Lehnenträgers 2 darstellt, wird in dem Formwerkzeug W aus dem vorgeformten und mit dem Fasermaterial F bestreuten Vorformvlies 1 ausgeformt und anschließend gestanzt und/oder "gepincht", d. h. aus einem Stück herausgeformt. Durch das Stanzen und/oder Pinchen werden insbesondere überschüssige Materialreste entfernt.

Nach dem Ausformen des Bauteils 2, hier des Lehnenträgers 2, wird der Lehnenträger 2 getrocknet. Dies kann vor oder nach dem Stanzen oder Pinchen erfolgen. Das Pinchen erfolgt zweckmäßigerweise während des Trocknens, das Stanzen erfolgt zweckmäßigerweise nach dem Trocknen, wobei der Lehnenträger 2 beispielsweise entweder gepincht oder gestanzt wird oder zum Beispiel bereichweise gepincht und bereichweise gestanzt wird. Das Trocknen erfolgt zweckmäßigerweise im geschlossenen Formwerkzeug W. Getrocknet wird zweckmäßigerweise durch eine Luftzufuhr zum Bauteil 2. Durch das erfindungsgemäße Verfahren, insbesondere die Verwendung eines vorgeformten Vorformvlieses 1, kann eine Trocknungsdauer von üblicherweise 120 Sekunden auf 60 Sekunden reduziert werden. Dies wird durch eine verbesserte Feuchtigkeitsaufnahme des Vorformvlieses 1 in Verbindung mit dem Faserverbundwerkstoff ermöglicht, wobei sich Luft wie ein so genannter "Spacer" auch in trocknungskritischen Bereichen verteilen kann.

Auch können Schnittbereiche thermisch verformt werden, um Stanzprozesse zu optimieren.

Zusätzlich kann der Lehnenträger 2 mit einem Einleger versehen werden. Eine Kombination des Vorformvlieses 1 mit so genannten PET-Einlegern im Kassettenwerkzeug reduziert zudem Gewicht, fördert Sortenreinheit und verbessert Trocknung. Dabei werden das Vorformvlies 1 und der Einleger mittels geeigneter Verbindungen, wie so genanntes Klebeweb beziehungsweise Heißnieteneinheit, miteinander verbunden.

Im Verfahrensabgleich mit einem aus dem Stand der Technik bekannten Verfahren können Zykluszeiten reduziert werden durch Verwendung eines gewünschten Wasseranteiles, insbesondere Reduzierung des Wasseranteils im hier beschriebenen Verfahren zur Herstellung des Lehnenträgers 2.

Zum herkömmlichen Herstellungsverfahren ergibt sich eine verbesserte Wasserreduzierung, so dass eine hohe Festigkeit des mit dem Fasermaterial bestreuten und zum Bauteil umgeformten Vorformvlieses 1 zur Bildung des Lehnenträgers 2 trotz einer schnellen Trocknung und kurzen Streuzeiten erhalten werden kann. Der Wasseranteil reduziert sich aufgrund der Gewichtsreduzierung sowie der Vorformvliessteifigkeit, die somit nicht durch das Bindemittel erzeugt werden muss. Durch die Verwendung des zum Halbzeug H vorgeformten Vorformvlieses 1, insbesondere durch dessen Steifigkeit, ist weniger aufzustreuendes Fasermaterial F und weniger Bindemittel erforderlich, wodurch auch der Anteil des im eingesparten Fasermaterial F und Bindemittel vorhandenen Wassers entfällt. Dadurch wird eine schnellere Trocknung erreicht.

Ein weiterer Vorteil ist die Möglichkeit der Trennung des Streuprozesses vom Formprozess, dadurch, dass das vorgeformte Vorformvlies 1 erst für einen Materialeintrag nutzbar ist und anschließend in das Formwerkzeug W übergeben werden kann.

In Figur 3 und insbesondere im Detail in Figur 4 ist das fertige Bauteil 2 dargestellt, welches auf der Oberseite, die die Vorderseite A des Bauteils, d. h. die A-Seite bildet, das Vorformvlies und auf der Unterseite, welche die Rückseite B des Bauteils, d. h. die B-Seite des Bauteils 2 bildet, das mit dem Vorformvlies 1 und miteinander verbundene Fasermaterial F aufweist. Das Vorformvlies 1 bildet somit vorteilhafterweise die komplette A-Seite des Bauteils, welche durch das vorgeformte Vorformvlies 1 eine hohe Konturschärfe aufweist. Dies ist ein wesentlicher Vorteil des Verfahrens, welcher mit Verfahren nach dem Stand der Technik, in welchen anstatt des Vorformvlieses 1 ein Wollvlies verwendet wird, welches nicht vorgeformt werden kann und keine Steifigkeit aufweist, nicht erzielt werden kann.

Figur 5 zeigt die drei Hauptschritte des Verfahrens. Im ersten Verfahrensschritt S1 wird das Vorformvlies 1 vorgeformt und dadurch das Halbzeug H ausgebildet. Im zweiten Verfahrensschritt S2 wird das Fasermaterial F auf das vorgeformte Vorformvlies 1, d. h. auf das Halbzeug H, aufgebracht. Im dritten Verfahrensschritt S3 wird das Bauteil 2 im Formwerkzeug W ausgeformt.

Für die Durchführung dieser Verfahrensschritte S1, S2, S3 sind verschiedene Varianten möglich. Im dargestellten Beispiel sind drei Stationen vorhanden, eine Station für jeden Verfahrensschritt S1, S2, S3. Hierbei wird das Vorformvlies 1 in einem separaten Vorformwerkzeug VW vorgeformt und dadurch das Halbzeug H ausgebildet, welches anschließend in die Streustation SS transportiert wird, in welcher das Fasermaterial F auf das Halbzeug H aufgestreut wird. Anschließend wird das Halbzeug H mit dem aufgestreuten Fasermaterial F in das Formwerkzeug W eingelegt und das Bauteil 2 ausgeformt. Bei diesem Verfahrensablauf werden das Vorformen des Vorformvlieses 1 zum Halbzeug H, das Aufbringen des Fasermaterials F auf das Halbzeug H und das Ausformen des Bauteils 2 voneinander entkoppelt, so dass bei der Herstellung mehrerer Bauteile diese Verfahrensschritte gleichzeitig durchgeführt werden, d. h. während ein Bauteil 2 ausgeformt wird, wird bereits das nächste Halbzeug H in der Streustation SS mit dem Fasermaterial F bestreut und ein weiteres Vorformvlies 1 im Vorformwerkzeug VW zu einem weiteren Halbzeug H vorgeformt.

Eine nicht dargestellte alternative Ausführungsform des Verfahrens unterscheidet sich vom in Figur 5 dargestellten Verfahrensablauf dadurch, dass der zweite Verfahrensschritt S2, d. h. das Aufbringen des Fasermaterials F auf das Halbzeug H, im Formwerkzeug W erfolgt, d. h. das Halbzeug H wird direkt in das Formwerkzeug W eingelegt, dort im zweiten Verfahrensschritt S2 mit dem Fasermaterial F bestreut und dann im dritten Verfahrensschritt S3 das Bauteil im Formwerkzeug W ausgeformt. Alternativ kann das Halbzeug H bereits im Vorformwerkzeug VW mit dem Fasermaterial F bestreut und dann in das Formwerkzeug W zum Ausbilden des Bauteils 2 transportiert werden. Bei diesen Verfahrensvarianten wird jeweils eine Arbeitsstation eingespart.

In einem weiteren nicht dargestellten alternativen Verfahrensablauf wird ein Formwerkzeugteil WT1, vorzugsweise das Formwerkzeugunterteil WT1, im ersten Verfahrensschritt S1 zur Ausformung des Halbzeugs H genutzt, so dass das Halbzeug H nicht weitertransportiert werden muss. D. h. das Halbzeug H wird durch Vorformen des Vorformvlieses 1 in diesem Formwerkzeugteil WT1 ausgebildet. Es wird dann nach dem Vorformen im zweiten Verfahrensschritt S2 mit dem Fasermaterial F bestreut und im dritten Verfahrensschritt S3 wird das Bauteil 2 im Formwerkzeug W ausgebildet. Bei dieser Ausführungsform wird somit das gesamte Verfahren in einer gemeinsamen Arbeitsstation durchgeführt. Eine Abwandlung dieses Verfahrensablaufs könnte vorsehen, dass das im ersten Verfahrensschritt S1 ausgeformte Halbzeug H aus dem Formwerkzeugteil WT1 entnommen wird, um es in einer separaten Streustation SS mit dem Fasermaterial F zu bestreuen, und danach wieder in das Formwerkzeug W eingelegt wird, um das Bauteil 2 auszuformen. Auf diese Weise kann beispielsweise in der Zwischenzeit ein weiteres Vorformvlies 1 zum Halbzeug vorgeformt oder ein weiteres Bauteil 2 ausgeformt werden.

Zur oben beschriebenen Ausbildung des Bauteils 2 im Formwerkzeug W im ersten Verfahrensschritt S1 ist beispielsweise eine erwärmte Platte erforderlich, auf welche das Vorformvlies 1 zunächst aufgelegt und erwärmt wird, um es in den thermoplastischen Zustand zu bringen und vorformen zu können. Alternativ oder zusätzlich zur erwärmten Platte sind auch andere Erwärmungseinrichtungen zur Erwärmung des Vorformvlieses 1 möglich, beispielsweise eine Erwärmung mittels Infrarotbestrahlung durch einen oder mehrere Infrarotstrahler. Anschließend wird das erwärmte Vorformvlies 1 in das Formwerkzeugteil WT1, zweckmäßigerweise das Formwerkzeugunterteil WT1, eingelegt. Das andere Formwerkzeugteil WT2, d. h. in diesem Fall das Formwerkzeugoberteil WT2, kann jedoch zum Vorformen des Vorformvlieses 1 nicht verwendet werden, da die Kavität des Formwerkzeugs W zum Ausformen des gesamten Bauteils 2 vorgesehen und daher zu groß ist. Daher muss ein Deckel, beispielsweise ein Zwischendeckel, für das Formwerkzeugunterteil WT1 verwendet werden, welcher als Formteil die Rückseitenform des Halbzeugs H aufweist und mit welchem das erwärmte Vorformvlies 1 in das Formwerkzeugteil WT1, zweckmäßigerweise in das Formwerkzeugunterteil WT1, gepresst wird. Durch das Formwerkzeugunterteil WT1 und den Deckel wird somit eine geeignete Formkavität zum Vorformen des Vorformvlieses 1 zum Halbzeug H bereitgestellt. Das erwärmte Vorformvlies 1 kann somit mittels des Formwerkzeugunterteils WT1 und des Deckels zum Halbzeug H vorgeformt werden.

Aufgrund dieser möglichen Varianten kann das Verfahren optimal beispielsweise an jeweilige Gegebenheiten und Erfordernisse eines Bauteilherstellers angepasst werden, beispielsweise an seinen vorhandenen Raum für Arbeitsstationen oder an eine erforderliche Fertigungszeit für eine Mehrzahl von Bauteilen 2.

Nach dem Ausformen des Bauteils 2 erfolgt bei allen Verfahrensabläufen zweckmäßigerweise das Trocknen, zweckmäßigerweise im geschlossenen Formwerkzeug W durch Luftströmung. Anschließend kann das Bauteil 2 aus dem Formwerkzeug W entnommen und beschnitten werden oder noch im Formwerkzeug W beschnitten und dann erst entnommen werden.

### Bezugszeichenliste

- 1: Vorformvlies
- 2: Bauteil, Lehnenträger

- A: Vorderseite
- B: Rückseite
- F: Fasermaterial
- H: Halbzeug
- SS: Streustation
- SW: Streuwerkzeug
- VW: Vorformwerkzeug
- W: Formwerkzeug
- WT1: Formwerkzeugteil, Formwerkzeugunterteil
- WT2: Formwerkzeugteil, Formwerkzeugoberteil

- S1: erster Verfahrensschritt
- S2: zweiter Verfahrensschritt
- S3: dritter Verfahrensschritt

## Patentansprüche

1. Verfahren zur Herstellung eines Bauteils (2), insbesondere für ein Fahrzeug,
**dadurch gekennzeichnet, dass** ein Vorformvlies (1), welches ein Kunststoffmaterial umfasst, zu einem steifen Halbzeug (H) mit einer vorgeformten Form vorgeformt wird, wobei auf eine Flächenseite des Halbzeugs (H), welche eine Rückseite des Bauteils (2) bildet, ein dreidimensional stochastisch orientiertes Fasermaterial (F) aufgebracht wird und wobei Fasern des Fasermaterials (F) miteinander und mit dem Halbzeug (H) durch Verpressen in einem Formwerkzeug (W) verbunden werden, während das Bauteil (2) in dem Formwerkzeug (W) ausgeformt wird.

2. Verfahren nach Anspruch 1,
**dadurch gekennzeichnet, dass** das Vorformvlies (1) mittels zumindest eines Formwerkzeugteils (WT1) des Formwerkzeugs (W) oder mittels eines separaten Vorformwerkzeugs (VW) zum steifen Halbzeug (H) vorgeformt wird.

3. Verfahren nach Anspruch 1 oder 2,
**dadurch gekennzeichnet, dass** das Fasermaterial (F) auf das steife Halbzeug (H) aufgebracht wird und danach das steife Halbzeug (H) mit dem Fasermaterial (F) in das Formwerkzeug (W) eingelegt wird, um das Bauteil (2) auszuformen.

4. Verfahren nach Anspruch 1 oder 2,
**dadurch gekennzeichnet, dass** das Fasermaterial (F) auf das im Formwerkzeug (W) angeordnete steife Halbzeug (H) aufgebracht wird und das Bauteil (2) ausgeformt wird.

5. Verfahren nach einem der vorhergehenden Ansprüche,
**dadurch gekennzeichnet, dass** als Bauteil (2) ein Fahrzeuginnenraumbauteil ausgebildet wird, insbesondere ein Bauteil (2) für einen Fahrzeugsitz.

6. Verfahren nach Anspruch 5,
**dadurch gekennzeichnet, dass** als Bauteil (2) ein Lehnenträger (2) oder ein Sitzkissenträger für einen Fahrzeugsitz ausgebildet wird.

7. Bauteil (2), insbesondere für ein Fahrzeug, hergestellt mittels eines Verfahrens nach einem der Ansprüche 1 bis 6, umfassend eine aus einem zu einem steifen Halbzeug (H) vorgeformten Vorformvlies (1) gebildete Schicht, welche eine Vorderseite des Bauteils (2) bildet, und eine Schicht, welche aus einem auf das vorgeformte Vorformvlies (1) aufgebrachten Fasermaterial (F) gebildet ist, wobei diese Schicht aus aufgebrachtem Fasermaterial (F) eine Rückseite des Bauteils (2) bildet.

8. Bauteil (2) nach Anspruch 7,
**gekennzeichnet durch** eine Ausbildung als ein Fahrzeuginnenraumbauteil, insbesondere als ein Bauteil (2) für einen Fahrzeugsitz.

9. Bauteil (2) nach Anspruch 8,
**gekennzeichnet durch** eine Ausbildung als ein Lehnenträger (2) oder ein Sitzkissenträger für einen Fahrzeugsitz.

10. Bauteil (2) nach Anspruch 9,
**dadurch gekennzeichnet, dass** die aus dem zu einem steifen Halbzeug (H) vorgeformten Vorformvlies (1) gebildete Schicht einer Vorderseite des Fahrzeugsitzes zugewandt ist und die Schicht, welche aus dem auf das vorgeformte Vorformvlies (1) aufgebrachten Fasermaterial (F) gebildet ist, einer Rückseite des Fahrzeugsitzes zugewandt ist.

## Claims

1. Method for producing a component (2), in particular for a vehicle,
**characterized in that** a nonwoven preform (1), which comprises a plastics material, is preformed to afford a stiff semifinished product (H) with a preformed shape, wherein a three-dimensionally stochastically oriented fibre material (F) is applied to a face side of the semifinished product (H) that forms a back side of the component (2), and wherein fibres of the fibre material (F) are connected to one another and to the semifinished product (H) by pressing them together in a mould (W), while the component (2) is being shaped in the mould (W).

2. Method according to Claim 1,
**characterized in that** the nonwoven preform (1) is preformed to afford the stiff semifinished product (H) by means of at least one mould part (WT1) of the mould (W) or by means of a separate preforming tool (VW).

3. Method according to Claim 1 or 2,
**characterized in that** the fibre material (F) is applied to the stiff semifinished product (H) and then the stiff semifinished product (H) with the fibre material (F) is inserted into the mould (W), in order to shape the component (2).

4. Method according to Claim 1 or 2,
**characterized in that** the fibre material (F) is applied to the stiff semifinished product (H) arranged in the mould (W) and the component (2) is shaped.

5. Method according to one of the preceding claims, **characterized in that** the component (2) formed is a vehicle interior component, in particular a component (2) for a vehicle seat.

6. Method according to Claim 5,
**characterized in that** the component (2) formed is a backrest support (2) or a seat-cushion support for a vehicle seat.

7. Component (2), in particular for a vehicle, produced by a method according to one of Claims 1 to 6, comprising a layer which is formed of a nonwoven preform (1) preformed to afford a stiff semifinished product (H) and which forms a front side of the component (2), and a layer which is formed of a fibre material (F) applied to the preformed nonwoven preform (1), wherein this layer of applied fibre material (F) forms a back side of the component (2).

8. Component (2) according to Claim 7,
**characterized by** being in the form of a vehicle interior component, in particular a component (2) for a vehicle seat.

9. Component (2) according to Claim 8,
**characterized by** being in the form of a backrest support (2) or a seat-cushion support for a vehicle seat.

10. Component (2) according to Claim 9,
**characterized in that** the layer formed of the nonwoven preform (1) preformed to afford a stiff semifinished product (H) faces towards a front side of the vehicle seat and the layer formed of the fibre material (F) applied to the preformed nonwoven preform (1) faces towards a back side of the vehicle seat.

## Revendications

1. Procédé de fabrication d'un composant (2), notamment pour un véhicule,
**caractérisé en ce qu'**un non-tissé préformé (1), qui comprend une matière plastique, est préformé en un demi-produit rigide (H) avec une forme préformée ; sur un côté plat du demi-produit (H), qui forme un côté arrière du composant (2), un matériau fibreux (F) orienté de manière tridimensionnellement stochastique étant appliqué, et des fibres du matériau fibreux (F) étant reliées entre elles et au demi-produit (H) par compression dans un outil de moulage (W), tandis que le composant (2) est formé dans l'outil de moulage (W).

2. Procédé selon la revendication 1, **caractérisé en ce que** le non-tissé préformé (1) est préformé en le demi-produit rigide (H) au moyen d'au moins une partie d'outil de moulage (WT1) de l'outil de moulage (W) ou au moyen d'un outil de préformage séparé (VW).

3. Procédé selon la revendication 1 ou 2, **caractérisé en ce que** le matériau fibreux (F) est appliqué sur le demi-produit rigide (H), puis le demi-produit rigide (H) avec le matériau fibreux (F) est placé dans l'outil de moulage (W) pour former le composant (2).

4. Procédé selon la revendication 1 ou 2, **caractérisé en ce que** le matériau fibreux (F) est appliqué sur le demi-produit rigide (H) agencé dans l'outil de moulage (W) et le composant (2) est formé.

5. Procédé selon l'une quelconque des revendications précédentes, **caractérisé en ce qu'**un composant d'espace intérieur de véhicule est réalisé en tant que composant (2), notamment un composant (2) pour un siège de véhicule.

6. Procédé selon la revendication 5, **caractérisé en ce qu'**un support de dossier (2) ou un support de coussin de siège pour un siège de véhicule est réalisé en tant que composant (2).

7. Composant (2), notamment pour un véhicule, fabriqué au moyen d'un procédé selon l'une quelconque des revendications 1 à 6, comprenant une couche formée d'un non-tissé préformé (1) préformé en un demi-produit rigide (H), qui forme un côté avant du composant (2), et une couche formée d'un matériau fibreux (F) appliqué sur le non-tissé préformé (1), cette couche de matériau fibreux appliqué (F) formant un côté arrière du composant (2).

8. Composant (2) selon la revendication 7, **caractérisé par** une réalisation en tant que composant d'espace intérieur de véhicule, notamment en tant que composant (2) pour un siège de véhicule.

9. Composant (2) selon la revendication 8, **caractérisé par** une réalisation en tant que support de dossier (2) ou support de coussin de siège pour un siège de véhicule.

10. Composant (2) selon la revendication 9, **caractérisé en ce que** la couche formée du non-tissé préformé (1) préformé en un demi-produit rigide (H) est tournée vers un côté avant du siège de véhicule et la couche formée du matériau fibreux (F) appliqué sur le non-tissé préformé (1) est tournée vers un côté arrière du siège de véhicule.
